# EUROPEAN PATENT SPECIFICATION

(11) **EP 3 709 715 B1**
(45) Date of publication and mention of the grant of the patent: **25.12.2024**
(21) Application number: 19162145.7
(22) Date of filing: 12.03.2019
(51) Int. Cl.: H04L 45/74, H04L 45/16, H04L 69/22, H04W 40/02, H04W 84/18, H04W 4/06, H04W 28/06, H04L 12/18

(54) **METHOD OF COMMUNICATING BETWEEN AT LEAST TWO NODES OF A RADIO COMMUNICATION NETWORK, RADIO COMMUNICATION NETWORK AND RADIO SIGNAL**
VERFAHREN ZUR KOMMUNIKATION ZWISCHEN MINDESTENS ZWEI KNOTEN EINES FUNKKOMMUNIKATIONSNETZWERKS, FUNKKOMMUNIKATIONSNETZWERK UND FUNKSIGNAL
PROCÉDÉ DE COMMUNICATION ENTRE AU MOINS DEUX NOEUDS D'UN RÉSEAU DE COMMUNICATION RADIO, RÉSEAU DE COMMUNICATION RADIO ET SIGNAL RADIO

(43) Date of publication of application: 16.09.2020
(73) Proprietor: Rohde & Schwarz GmbH & Co. KG, 81671 München (DE)
(72) Inventor: Baessler, Andreas, 81671 München (DE)
(74) Representative: Novagraaf Group

(56) References cited:
- US-A1- 2015 312 136
- STINE J A: "Node State Multicasting in Wireless Ad Hoc Networks", MILITARY COMMUNICATIONS CONFERENCE, 2005. MILCOM 2005. IEEE ATLANTIC CITY, NJ, USA 17-20 OCT. 2005, PISCATAWAY, NJ, USA,IEEE, PISCATAWAY, NJ, USA, 17 October 2005 (2005-10-17), pages 1 - 7, XP010901469, ISBN: 978-0-7803-9393-6, DOI: 10.1109/MILCOM.2005.1605969
- JUAN A SANCHEZ ET AL: "GMR: Geographic Multicast Routing for Wireless Sensor Networks", 2006 3RD ANNUAL IEEE COMMUNICATIONS SOCIETY CONFERENCE ON SENSOR AND AD HOC COMMUNICATIONS AND NETWORKS - 25 - 28 SEPT. 2006 - RESTON, VA, USA, IEEE, PISCATAWAY, NJ, USA, 1 January 2006 (2006-01-01), pages 20 - 29, XP031012118, ISBN: 978-1-4244-0626-5

## Description

The invention relates to a method of communicating between at least two nodes of a radio communication network. Further, the invention relates to a radio communication network and a radio signal.

In mobile or rather wireless networks, in particular a mobile adhoc network (MANET), multicast data packets are only addressed to a certain subset of all nodes in the respective network. The nodes of this subset correspond to so-called destination nodes. So far, the data packets are transmitted by means of simple-multicast-forwarding (SMF) techniques according to which the entire network, namely all nodes of the network, receive the respective data packets whether the nodes shall receive the data packets or not.

However, the simple-multicast-forwarding (SMF) techniques yield in unnecessary forwarding of the data packets as the data packets are forwarded to all nodes even though they are only addressed to a certain subset of the respective network. Accordingly, the performance and the efficiency of the network are reduced.

In Stine J.A.: "Node State Multicasting in Wireless Ad Hoc Network", a MAC multicast scenario is described according to which packet headers are adjusted while routing the data packets through the network.

Juan A Sanchez et al:" GMR: Geographic Multicast Routing for Wireless Sensor Networks" describes inter alia a specific scenario taking into account that a processing node identifies being closer to a destination than the originating node.

US 2015/0312136 A1 describes a system for centrally optimized variable length coding wherein codewords for routing participants are used, and wherein the routing is predetermined from the beginning.

Therefore, there is a need for a simple, but efficient way to ensure multicast communication over-the-air, in particular for radio communication.

The invention provides a method of communicating between at least a first node, a second node, and a destination node as defined in claim 1.

Further, the invention provides a radio communication network as defined in claim 3.

The invention is based on the idea that a dynamic addressing is provided since the multicast header used for routing data of the radio signal through the radio communication network can be adjusted by the respective node that processes the radio signal. Hence, the addressing may be dynamically changed based on the routing table. The routing table in turn ensures an efficient forwarding route within the radio communication network so that unnecessary forwarding can be avoided effectively. In other words, the routing table provides information with regard to the structure of the nodes in the radio communication network.

In fact, the multicast header comprises address data, namely at least one destination address as well as at least one next hop address if the next node does not correspond to the destination address. The address data corresponds to absolute address information of the respective nodes.

Since the content of the multicast header is adaptable, particularly by the processing node, namely the node processing the radio signal, it is not necessary to copy the respective data packet to ensure that the data is transmitted to the desired destination address or rather destination node. In fact, the valid next hop address is adapted by each processing node so that the respective data packet is only sent once as the multicast header information of the radio signal is adapted, particularly the valid next hop address in the multicast header.

Accordingly, each processing node evaluates the received multicast header and generates an adapted/adjusted multicast header. In other words, each node is configured to evaluate and to adapt the multicast header, particularly the information contained in the multicast header.

The multicast header is adapted/adjusted, as the content of the multicast header is adapted/adjusted with respect to the routing. However, the adapted/adjusted multicast header is always newly generated by the respective processing node at least in parts, namely the next hop address..

In fact, the same data packet transmitted via the radio signal is processed by the respective nodes differently.

The multicast header may comprise several next hop addresses depending on the routing and/or the destination address(es) with respect to the source of the data packet or rather the radio signal, namely the first node that may correspond to the transmitting or rather source node. For instance, more than one next hop address is provided if the radio signal shall be distributed via at least two different branches in the radio communication network, which originate from the processing node. The respective receiving node verifies whether its address is listed as the next hop address in the multicast header and accepts the radio signal if its address is listed.

Generally, the routing ensures that the data packet or rather the radio signal is forwarded from one node to a next node, namely a node in the 1-hop neighborhood.

For instance, optimized link state routing (OLSR) protocol techniques may be applied that are typically used to compute next hop destinations for all nodes in a network using shortest hop forwarding paths. This ensures an efficient forwarding route within the network.

The OLSR protocol techniques may be used while accessing the routing table.

In fact, the routing table is used to provide unicast routing information since the processing node, particularly the first node, selects the at least one next hop address based on the routing table.

Moreover, the processing node, for instance the second node, determines whether or not the destination node assigned to the destination address encompassed in the multicast header corresponds to the next node, namely the node in the 1-hop neighborhood. If the destination node is not the next node (1-hop neighborhood), the processing node selects the next hop address which ensures an efficient forwarding of the data packet to the destination node or rather the destination address encompassed in the multicast header.

Depending on the routing table, the processing node, for instance the first node, generates the multicast header that may comprise a list of next hop entries to be processed in order to direct the data packet to the intended destination nodes or rather the destination addresses. The list of next hop entries is generated based on the information provided by the routing table. More than one next hop entry is used if at least two different branches in the radio communication network have to be used for forwarding the radio signal to the respective destination addresses.

If one branch in the radio communication network, the multicast header may comprise only one next hop entry.

In fact, each next hop entry comprises information regarding the next hop address as well as destination address(es) assigned to the next hop address.

In other words, each next hop entry comprises information whether (a) certain destination address(es) is/are reached via the next hop address that is assigned to the respective next hop entry.

The radio signal, in particular the multicast header, may be forwarded from the first node to the destination node via several nodes that each process and adapt the multicast header appropriately. As mentioned above, each processing node adapts the multicast header, particularly wherein the multicast header is generated newly by each processing node at least in parts while accessing the routing table.

Accordingly, the first node, namely the transmitting node or rather source node, processes a radio signal in terms of provide or rather generate the radio signal.

For this purpose, the first node accesses the routing table in order to retrieve information with regard to the (absolute) addresses of the nodes, particularly the intended destination node(s).

Then, the first node generates the multicast header of the radio signal to incorporate the (absolute) address information of the intended destination node(s) as well as the at least one next hop address.

The next hop address relates to a node interposed between the first node and the destination node so that the most efficient forwarding of the data packet corresponds to routing the data packet via the node assigned to the next hop address.

Particularly, address information of several next hop addresses may be incorporated into the multicast header, namely in a list. This however depends on the routing, particularly the location of the destination node(s) with respect to the transmitting or rather source node. Thus, more than one next hop address or rather next hop entry is only provided if the radio signal has to be transmitted via different branches of the radio communication network.

Then, the first node transmits the radio signal to a next node, namely the second node, which in turn processes the radio signal again. This means that the second node becomes the processing node as it processes the radio signal.

In fact, the processing node adjusts the next hop address encompassed in the multicast header. Accordingly, the multicast header is adapted appropriately. This is done by accessing the routing table and generating the multicast header again with new address information regarding the next hop address.

If a second node accepts a radio signal transmitted by the first node while parsing the multicast header and comparing the next hop address, the second node will have to further transmit the radio signal later when the second node becomes the processing node.

Generally, the number of participating nodes of the radio communication network is reduced to a minimum since the best forwarding route is determined, particularly at the beginning. Then, the data packet(s) are/is forwarded to the destination nodes via the shortest or rather best forwarding route within the radio communication network which ensures to involve as less nodes as possible.

Put another way, forwarding loops are reduced to a minimum.

Since the network is a radio communication network, the respective nodes correspond to radio nodes.

Put another way, the radio communication network is a wireless one. Therefore, the respective nodes, namely the radio nodes, are configured to communicate in a wireless manner.

In this case, the next node corresponds to the destination node so that no intermediate processing node is required to further forward the radio signal. Thus, the respective information is cancelled from the multicast header.

The information with regard to the destination address may be stored elsewhere, particularly in the media access control header (MAC header) of the radio signal.

However, the processing node may also read out the respective destination address from the multicast header received. Therefore, the destination address assigned to the multicast header may be maintained by the processing node, as only the next hop address is adapted.

As already mentioned, the destination address is only stored in the multicast header to ensure efficient routing of data of the radio signal within the radio communication network.

Generally, the next node corresponds to a node in the 1-hop neighborhood of the processing node.

Each node may be configured to delete the destination address from the multicast header. As each node of the radio communication network may process the radio signal, each node is configured to delete the destination address since the next node of the respective node may correspond to the destination node. Then, it is no more necessary that the destination address is provided in the multicast header.

Particularly, each node is configured to delete the destination address from the multicast header if the destination address corresponds to a next node. As mentioned above, no intermediate processing node is required to further forward the radio signal to the destination node so that the respective destination address is deleted from the multicast header.

The second node processes the radio signal and transmits the radio signal with an adjusted multicast header to a next node in the 1-hop neighborhood of the second node. In general, each node is configured to transmit the radio signal with adjusted multicast header to a next node. Each node of the radio communication network may participate in the routing of the radio signal or rather the data packet so that each node is configured to adapt the multicast header and to transmit the radio signal with adjusted multicast header to a next hop. As already mentioned, the respective node, namely the processing node, accesses the routing table in order to generate the adjusted multicast header at least partly.

Particularly, the radio signal is only accepted by the next node if the next node corresponds to the next hop address indicated in the multicast header. Hence, the respective receiving node is configured to accept the radio signal only when its address corresponds to the next hop address indicated in the multicast header. Accordingly, the receiving node is enabled to parse the multicast header. This avoids unnecessary forwarding since the radio signal or rather the data packet is only forwarded to or rather accepted by the next node if the next node is part of the efficient routing.

Put another way, if the next node of the processing node is different to the next hop address, the radio signal is not accepted by the next node. Thus, unnecessary forwarding of data packets or rather radio signals is avoided effectively.

If the destination address corresponds to a next node, the multicast header is adjusted by the second node such that the multicast header is empty. As no next hop address is required anymore and the information with regard to the destination address is stored elsewhere, namely in the MAC header, the multicast header may not comprise any content. As indicated above, this applies only for the specific case in which the destination address is in the 1-hop neighborhood of the processing node. In other words, each node is configured to delete the destination address and the next hop address from the multicast header if the destination address corresponds to a next node.

The routing table is stored in each node. Each node may be the source node or rather transmitting node so that each node may comprise the routing table.

Moreover, the routing table may include address information of all nods in the radio communication network. The address information corresponds to absolute addresses of the respective nodes. As the address information of all nods is provided, an efficient routing for data of the radio signal within the radio communication network can be obtained.

Put another way, the respective processing node accesses the routing table to verify whether the destination address is in its 1-hop neighborhood. If so, the processing node deletes the multicast header for the respective radio signal such that the multicast header is empty. If not, the processing node retrieves the information of the next hop address from the routing table in order to route the radio signal to the destination address in the most efficient way.

The invention also provides a radio signal as defined in claim 5.

Further, the radio signal comprises a payload and a media access control header. Thus, the radio signal comprises the multicast header in addition to the payload and the media access control header (MAC header). The MAC header may also comprise the destination address(es). Accordingly, the multicast header is only provided for routing data of the radio signal within the radio communication network in order to provide the most efficient way to the desired destination addresses.

Another aspect provides that at least one next hop entry, in particular several next hop entries, is encompassed in the multicast header, wherein the next hop entry comprises information regarding the next hop address and information regarding at least one destination address assigned to the next hop address. The list of next hop entries is processed by the nodes of the radio communication network in order to forward the data packet to the intended destination nodes or rather the destination addresses. Each next hop entry comprises information regarding the next hop address as well as destination address(es) assigned to the next hop address. Put another way, each next hop entry comprises information which destination address(es) can be reached via the respective next hop address that is assigned to next hop entry.

The foregoing aspects and many of the attendant advantages of the claimed subject matter will become more readily appreciated as the same become better understood by reference to the following detailed description, when taken in conjunction with the accompanying drawings, wherein:
- Figure 1 shows a schematic overview of a radio communication network according to the invention,
- Figure 2 shows a flow-chart illustrating a method of communicating between two nodes of a radio communication network according to the invention, and
- Figure 3 shows a schematic overview of a radio signal according to the present invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

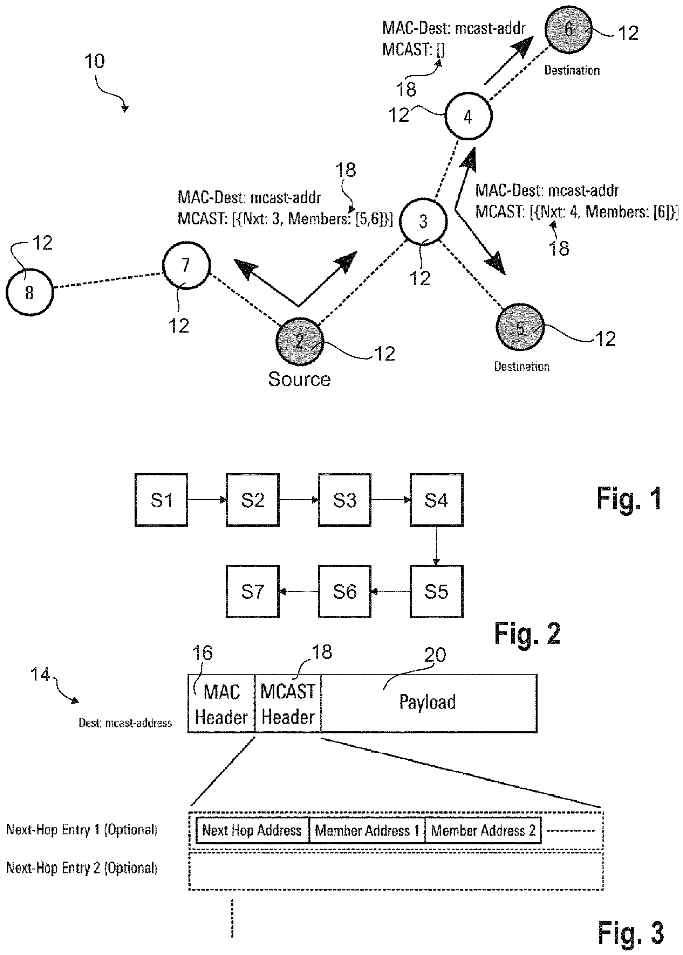

In Figure 1, a radio communication network 10 is shown that comprises several nodes 12 that are participants of the radio communication network 10.

In the shown embodiments, seven nodes 12 are shown that are labelled by the numbers 2 to 8 for distinguishing purposes.

Since the radio communication network 10 is a wireless or rather mobile one, the nodes 12 correspond to radio nodes which are configured to transmit radio signals over-the-air among each other. Thus, information contained in data packets of the radio signals exchanged is forwarded from one node 12 to another node 12 as will be described hereinafter while also taking Figures 2 and 3 into account.

In a first step S1, the first node 12 processes a radio signal 14 in terms of generating the radio signal 14. Thus, the first node 12 corresponds to a source or rather transmitting node 12 as indicated in Figure 1 by the term "source". Accordingly, the first node 12 corresponds to the node 12 labelled with "2".

The radio signal 14 generated has a media access control header 16 (MAC header), a multicast header 18 and a payload 20 as indicated in Figure 3.

While processing or rather generating the radio signal 14, the first node 12 accesses a routing table of the radio communication network 10. The routing table comprises (absolute) address information of all nodes 12 in the radio communication network 10. Thus, the first node 12 is enabled to evaluate or rather determine the nodes 12 of the radio communication network 10 belonging to an intended subset of nodes 12. In fact, the subset of nodes 12 relate to destination nodes 12 as indicated in Figure 1 appropriately. Put another way, the first node 12, namely the transmitting node, retrieves information with regard to the destination nodes 12 from the routing table, namely the respective subset of nodes 12.

Accessing the routing table may relate to a second step S2.

Further, the first node 12 by taking the routing table into account determines which of the other nodes 12, particularly intermediate node(s) 12 between the first node 12 and the destination node(s) 12, are/is required to forward the radio signal 14 to the intended destination node(s) 12 in an efficient way.

In other words, the first node 12 selects the next hop address(es) of the intermediate node(s) 12 based on the routing table.

In the shown example of Figure 1, the destination nodes 12 correspond to the nodes 12 indicated by the term "destination", namely the nodes 12 labelled with "5" and "6". The respective intermediate nodes 12 are labelled with "3" and "4" as will be described hereinafter.

Once the first node 12 has determined the destination nodes 12 as well as the intermediate nodes 12 in the 1-hop neighborhood, namely the respective next-hop address(es), the respective information is incorporated into the multicast header 18 in a third step S3.

This is also schematically shown in Figures 1 and 3.

Thus, a list of next hop entries may be generated that is incorporated in the multicast header 18; please refer to Figure 3 in this regard.

In the shown embodiment of Figure 1, no list of next hop entries is required, as the destination addresses are assigned to a common branch starting from the first node 12, namely the transmitting node 12 labelled with "2". The common branch is assigned to the right branch in Figure 1, which originates from the transmitting node 12 labelled with "2".

In a fourth step S4, the first node 12 transmits the radio signal 14 generated.

However, the radio signal 14 is only accepted by a next node 12 of the first node 12, namely the nodes 12 labelled with "7" and "3", if the next node 12 corresponds to the next hop address indicated in the multicast header 18. The next node 12 generally corresponds to a node 12 within the 1-hop neighborhood of the processing node 12.

As shown in Figure 1, the next hop address, abbreviated by "Nxt", is the node 12 labelled with "3". Accordingly, the radio signal 14 is only transmitted from the first node 12 to the next node 12 labelled with "3" correctly, as the next node 12 labelled with "7" will not accept the radio signal. The node 12 labelled with "3" corresponds to a second node 12 that receives the radio signal 14 transmitted by the first node 12, whereas the node 12 labelled with "7" parse the multicast header 18 of the radio signal transmitted and identifies that the next hop address does not match with its own address. Put another way, the node 12 labelled with "7" will refuse the radio signal.

As also shown in Figure 1, the multicast header 18 also comprises the information with regard to the destination addresses, namely the nodes 12 labelled with "5" and "6", that can be reached via the intermediate node 12 labelled with "3", namely the node 12 assigned to the next hop address.

Generally, each destination address is only assigned to a single next hop address.

In Figure 1, the destination addresses are called "members" as the destination nodes 12 correspond to members of the respective subset that shall receive the data packet assigned to the radio signal 14 as already discussed.

Accordingly, the radio signal 14 is not forwarded from the first node 12 to the next node 12 labelled with "7" since the next hop address is different to the one of the next node 12 labelled with "7".

In a fifth step S5, the second node 12, namely the node 12 labelled with "3", receives and processes the radio signal 14. Thus, the second node 12 becomes the processing node 12.

This means that the processing node 12 accesses the multicast header 18 of the radio signal 14.

In a sixth step S6, the processing node 12, namely the second node 12 labelled with "3", adjusts the multicast header 18 as the valid next hop entry is adapted again. Put another way, the processing node 12, namely the second node 12 labelled with "3", accesses the routing table in order to generate a new multicast header 18.

For instance, the multicast header 18 is only adapted in parts, as the destination address(es) is/are maintained.

However, the next hop address is always adapted/adjusted by a new processing node 12.

In fact, the former next hop entry corresponds to the (absolute) address of the second node 12 labelled with "3". This entry became invalid now as the second node 12 labelled with "3" has received the radio signal 14 and processes it appropriately. In the shown example, the next hop entry to be processed by the second node 12 labelled with "3" may comprise the next hop address assigned to the node 12 labelled with "4" wherein the destination address of the destination node 12 labelled with "6" is assigned thereto as shown in Figure 1. Put another way, the actual processing node labelled with "3" adapts/adjusts the multicast header 18 such that the next hop address corresponds to the node 12 labelled with "4" which is assigned to the destination address of the destination node 12 labelled with "6".

Hence, the actual processing node 12, namely the second node 12 labelled with "3", may transmit the radio signal 14 with adjusted multicast header 18 to the next node 12, namely the node 12 labelled with "4" in a seventh step S7.

In other words, the second node 12 labelled with "3" has adjusted/adapted the multicast header 18 such that the next hop address and the destination address were adapted.

The radio signal received from the first node 12 labelled with "1" is transmitted via two different branches in order to reach the destination addresses assigned to the nodes 12 labelled with "6" and "5".

Further, the actual processing node 12 is generally configured to delete the destination address (as well as the next hop address) from the multicast header 18 provided that the destination address corresponds to a next node 12, namely a node 12 in the 1-hop neighborhood. Put another way, each processing node 12 is configured to generate an empty multicast header 18 if the destination address corresponds to the next node 12.

This is shown for the adapted multicast header 18 assigned to the radio signal 14 forwarded from the node 12 labelled with "4" to the destination node 12 labelled with "6".

In a similar manner, the radio signal 14 forwarded from the node 12 labelled with "3" to the destination node 12 labelled with "5" has a multicast header 18 that is empty.

If the node 12 labelled with "8" had correspond to a destination node, the first node 12 labelled with "2" would have comprised a list of two next hop entries (please refer to Figure 3). Then, the radio signal would have been transmitted via two different branches originating from the first node 12 labelled with "2", namely to the second nodes 12 labelled with "3" and "7".

Accordingly, the radio signal would have been routed to the node labelled with "8" in a substantially similar manner as the radio signal is routed to the node 12 labelled with "5".

In fact, the information with regard to the intended destination address may be stored elsewhere, in particular in the media access control header 16 of the radio signal 14. Thus, each processing node 12 is enabled to obtain the information with regard to the destination address(es) from the media access control header 16 wherein the next hop address(es) assigned to the respective destination address(es) is/are derived while accessing the routing table.

In general, each of the nodes 12 in the radio communication network 10 may become the first node 12, the second node 12, the intermediate node 12 or the destination node 12 which depends on the data packet(s) to be transmitted and/or the routing used. Put another way, this depends on the data packet to be transmitted via the radio signal 14 as well as the respective subset.

In fact, the most efficient routing is determined continuously by each actual processing node 12 so that each of the nodes 12 may become participant of the routing.

Therefore, each of the nodes 12 is configured to process or rather generate the radio signal 14.

Further, each of the nodes 12 is configured to access the routing table. Particularly, the routing table may be stored in each of the nodes 12.

In addition, each of the nodes 12 may adjust the multicast header 18 of the radio signal 14, in particular the next hop address encompassed in the multicast header 18 and/or the destination address encompassed in the multicast header 18.

In fact, each of the nodes 12 may be configured to generate the multicast header 18.

Furthermore, each of the nodes 12 may transmit the radio signal 14 with adjusted multicast header 18 to a next node 12.

In general, an efficient way of distributing information or rather data packet(s) within the radio communication network 10 is provided since an efficient routing among the nodes 12 of the radio communication network 10 is ensured.

For efficient routing, each destination address is only assigned to one next hop address in case of several next hop addresses as indicated in Figure 1 for the radio signal 14 transmitted by the node 12 labelled with "3".

## Claims

1. A method of communicating between at least a first node (12), a second node (12) being an intermediate node,
(12), and a destination node (12), wherein the nodes (12) are participants of a radio communication network (10) that has a communication standard with a data format for data exchange, wherein the data format comprises a multicast header (18) for routing data of a radio signal through the radio communication network (10), wherein the multicast header (18) comprises address data, wherein a routing table is stored in each node (12), wherein the routing table provides address information, wherein the method comprises the following steps:
- Providing or generating the radio signal assigned to the communication standard by means of the first node (12),
- Accessing the routing table by means of the first node (12),
- Determining, by the first node (12), which intermediate nodes (12) are required to forward the radio signal to the destination node (12), wherein the first node (12) selects a next hop address based on the routing table,
- Incorporating, by the first node (12), a destination address of the destination node (12) and the next hop address into the multicast header (18),
- Transmitting, by the first node (12), the radio signal generated,
- Receiving, by the second node (12), the radio signal transmitted by the first node (12),
- Accessing, by the second node (12), the routing table,
- Determining by means of the second node (12) whether or not the destination node (12) assigned to the destination address encompassed in the multicast header (18) corresponds to a next node of the second node (12), namely a node in the 1-hop neighborhood of the second node (12), wherein the routing table is accessed by the second node (12) to verify whether the destination address is in the 1-hop neighborhood,
- Adjusting the multicast header (18) by means of the second node (12),
wherein if the destination node (12) corresponds to the next node (12) in the 1-hop neighborhood of the second node (12), the next-hop address and the destination address are deleted from the multicast header (18) by the second node (12) such that the multicast header (18) is empty,
wherein if the next node (12) is not the destination node (12), the second node (12) selects the next hop address and adapts the next hop address of the multicast header (18), and
- Transmitting, by the second node (12), the radio signal with the adjusted multicast header (18) to the next node (12).

2. The method according to claim 1, wherein the radio signal is only accepted by the next node (12) in the 1-hop neighborhood of the second node (12) if the address of the next node (12) corresponds to the next hop address indicated in the multicast header (18).

3. A radio communication network (10) with a communication standard and at least a first node (12), a second node (12) being an intermediate node, and a destination node (12) configured to
communicate with each other, wherein the communication standard has a data format for data exchange that comprises a multicast header (18) for routing data of a radio signal through the radio communication network (10), wherein the multicast header (18) comprises address data, wherein each node (12) of the radio communication network (10) further comprises a routing table that provides address information,
wherein the first node (12) is configured to provide or generate the radio signal, wherein the first node (12) is configured to access the routing table, wherein the first node (12) is configured to determine which intermediate nodes (12) are required to forward the radio signal to a destination node (12), wherein the radio communication network (10) is configured to perform the method according to any one of the preceding claims.

4. The radio communication network (10) according to claim 3, wherein the routing table includes address information of all nodes (12) in the radio communication network (10).

5. A radio signal to be transmitted over-the-air by a method according to any of claims 1 or 2 or by a radio communication network (10) according to any of claims 3 or 4, wherein the radio signal (14) comprises a media access control header (16), a payload (20) and a multicast header (18) for routing data of the radio signal (14) through the radio communication network (10), wherein the multicast header (18) is configured to be adapted by a node (12) of a radio communication network (10) via which the radio signal (14) is transmitted over-the-air, **characterized in that** the multicast header (18) of the radio signal (14) is empty when the radio signal (14) is transmitted by the respective node to a next node (12) in the 1-hop neighborhood of the respective node (12), and when the next-node corresponds to a destination node, and wherein information with regard to a destination address is stored in the media access control header (16) of the radio signal (14).

## Patentansprüche

1. Verfahren zum Kommunizieren zwischen mindestens einem ersten Knoten (12), einem zweiten Knoten (12), der ein Zwischenknoten ist,
und einem Zielknoten (12), wobei die Knoten (12) Teilnehmer eines Funkkommunikationsnetzes (10) sind, das einen Kommunikationsstandard mit einem Datenformat zum Datenaustausch aufweist, wobei das Datenformat einen Multicast-Header (18) zum Routen von Daten eines Funksignals durch das Funkkommunikationsnetz (10) hindurch umfasst, wobei der Multicast-Header (18) Adressdaten umfasst, wobei in jedem Knoten (12) eine Routing-Tabelle gespeichert ist, wobei die Routing-Tabelle Adressinformationen bereitstellt, wobei das Verfahren die folgenden Schritte umfasst:
- Bereitstellen oder Erzeugen des Funksignals, das dem Kommunikationsstandard mittels des ersten Knotens (12) zugeordnet ist,
- Zugreifen auf die Routing-Tabelle mittels des ersten Knotens (12),
- Bestimmen, durch den ersten Knoten (12), welche Zwischenknoten (12) erforderlich sind, um das Funksignal an den Zielknoten (12) weiterzuleiten, wobei der erste Knoten (12) basierend auf der Routing-Tabelle eine Next-Hop-Adresse auswählt,
- Einfügen, durch den ersten Knoten (12), einer Zieladresse des Zielknotens (12) und der Next-Hop-Adresse in den Multicast-Header (18),
- Übertragen, durch den ersten Knoten (12), des erzeugten Funksignals,
- Empfangen, durch den zweiten Knoten (12), des Funksignals, das durch den ersten Knoten (12) übertragen wird,
- Zugreifen, durch den zweiten Knoten (12), auf die Routing-Tabelle,
- Bestimmen, mittels des zweiten Knotens (12), ob der Zielknoten (12), der der Zieladresse zugeordnet wird, die in dem Multicast-Header (18) enthalten ist, einem Next-Knoten des zweiten Knotens (12) entspricht, nämlich einem Knoten in der 1-Hop-Nachbarschaft des zweiten Knotens (12), wobei durch den zweiten Knoten (12) auf die Routing-Tabelle zugegriffen wird, um zu überprüfen, ob die Zieladresse in der 1-Hop-Nachbarschaft liegt,
- Anpassen des Multicast-Headers (18) mittels des zweiten Knotens (12), wobei, falls der Zielknoten (12) dem Next-Knoten (12) in der 1-Hop-Nachbarschaft des zweiten Knotens (12) entspricht, die Next-Hop-Adresse und die Zieladresse durch den zweiten Knoten (12) aus dem Multicast-Header (18) derart gelöscht werden, dass der Multicast-Header (18) leer ist,
wobei, falls der Next-Knoten (12) nicht der Zielknoten (12) ist, der zweite Knoten (12) die Next-Hop-Adresse auswählt und die Next-Hop-Adresse des Multicast-Headers (18) anpasst, und
- Übertragen, durch den zweiten Knoten (12), des Funksignals mit dem angepassten Multicast-Header (18) an den Next-Knoten (12).

2. Verfahren nach Anspruch 1, wobei das Funksignal durch den Next-Knoten (12) in der 1-Hop-Nachbarschaft des zweiten Knotens (12) nur dann akzeptiert wird, falls die Adresse des Next-Knotens (12) mit der Next-Hop-Adresse übereinstimmt, die in dem Multicast-Header (18) angegeben wird.

3. Funkkommunikationsnetz (10) mit einem Kommunikationsstandard und mindestens einem ersten Knoten (12), einem zweiten Knoten (12), der ein Zwischenknoten ist, und einem Zielknoten (12), die konfiguriert sind, um miteinander zu kommunizieren, wobei der Kommunikationsstandard ein Datenformat für den Datenaustausch aufweist, das einen Multicast-Header (18) zum Routen von Daten eines Funksignals durch das Funkkommunikationsnetz (10) hindurch umfasst, wobei der Multicast-Header (18) Adressdaten umfasst, wobei jeder Knoten (12) des Funkkommunikationsnetzes (10) ferner eine Routing-Tabelle umfasst, die Adressinformationen bereitstellt,
wobei der erste Knoten (12) konfiguriert ist, um das Funksignal bereitzustellen oder zu erzeugen, wobei der erste Knoten (12) konfiguriert ist, um auf die Routing-Tabelle zuzugreifen, wobei der erste Knoten (12) konfiguriert ist, um zu bestimmen, welche Zwischenknoten (12) erforderlich sind, um das Funksignal an einen Zielknoten (12) weiterzuleiten, wobei das Funkkommunikationsnetz (10) konfiguriert ist, um das Verfahren nach einem der vorstehenden Ansprüche durchzuführen.

4. Funkkommunikationsnetz (10) nach Anspruch 3, wobei die Routing-Tabelle Adressinformationen aller Knoten (12) in dem Funkkommunikationsnetz (10) einschließt.

5. Funksignal, das durch ein Verfahren nach einem der Ansprüche 1 oder 2 oder durch ein Funkkommunikationsnetz (10) nach einem der Ansprüche 3 oder 4 terrestrisch übertragen werden soll, wobei das Funksignal (14) einen Medienzugriffssteuerungs-Header (16), eine Nutzlast (20) und einen Multicast-Header (18) zum Routen von Daten des Funksignals (14) durch das Funkkommunikationsnetz (10) hindurch umfasst, wobei der Multicast-Header (18) konfiguriert ist, um durch einen Knoten (12) eines Funkkommunikationsnetzes (10) angepasst zu werden, über das das Funksignal (14) terrestrisch übertragen wird, **dadurch gekennzeichnet, dass** der Multicast-Header (18) des Funksignals (14) leer ist, wenn das Funksignal (14) durch den jeweiligen Knoten an einen nächsten Knoten (12) in der 1-Hop-Nachbarschaft des jeweiligen Knotens (12) übertragen wird und wenn der nächste Knoten einem Zielknoten entspricht, und wobei Informationen hinsichtlich einer Zieladresse in dem Medienzugriffssteuerungs-Header (16) des Funksignals (14) gespeichert sind.

## Revendications

1. Procédé permettant la communication entre au moins un premier noeud (12), un second noeud (12) qui est un noeud intermédiaire,
et un noeud de destination (12), dans lequel les noeuds (12) sont des participants d'un réseau de communication radio (10) qui possède une norme de communication avec un format de données pour un échange de données, dans lequel le format de données comprend un en-tête de multidiffusion (18) pour l'acheminement de données d'un signal radio par le biais du réseau de communication radio (10), dans lequel l'en-tête de multidiffusion (18) comprend des données d'adresse, dans lequel une table d'acheminement est stockée dans chaque noeud (12), dans lequel la table d'acheminement fournit des informations d'adresse, dans lequel le procédé comprend les étapes suivantes consistant à :
- fournir ou générer le signal radio attribué à la norme de communication au moyen du premier noeud (12),
- accéder à la table d'acheminement au moyen du premier noeud (12),
- déterminer, par le premier noeud (12), quels noeuds intermédiaires (12) sont requis pour transférer le signal radio au noeud de destination (12), dans lequel le premier noeud (12) sélectionne une adresse de saut suivant sur la base de la table d'acheminement,
- incorporer, par le premier noeud (12), une adresse de destination du noeud de destination (12) et l'adresse de saut suivant dans l'en-tête de multidiffusion (18),
- transmettre, par le premier noeud (12), le signal radio généré,
- recevoir, par le second noeud (12), le signal radio transmis par le premier noeud (12),
- accéder, par le second noeud (12), à la table d'acheminement,
- déterminer, au moyen du second noeud (12) si le noeud de destination (12) attribué à l'adresse de destination incluse dans l'en-tête de multidiffusion (18) correspond ou non à un noeud suivant du second noeud (12), à savoir un noeud dans le voisinage à un seul saut du second noeud (12), dans lequel la table d'acheminement est accédée par le second noeud (12) pour vérifier si l'adresse de destination se trouve dans le voisinage à un seul saut,
- ajuster l'en-tête de multidiffusion (18) au moyen du second noeud (12), dans lequel, si le noeud de destination (12) correspond au noeud suivant (12) dans le voisinage à un seul saut du second noeud (12), l'adresse de saut suivant et l'adresse de destination sont supprimées de l'en-tête de multidiffusion (18) par le second noeud (12) de telle sorte que l'en-tête de multidiffusion (18) est vide,
dans lequel si le noeud suivant (12) n'est pas le noeud de destination (12), le second noeud (12) sélectionne l'adresse de saut suivant et adapte l'adresse de saut suivant de l'en-tête de multidiffusion (18), et
- transmettre, par le second noeud (12), le signal radio avec l'en-tête de multidiffusion ajusté (18) au noeud suivant (12).

2. Procédé selon la revendication 1, dans lequel le signal radio n'est accepté par le noeud suivant (12) dans le voisinage à un seul saut du second noeud (12) que si l'adresse du noeud suivant (12) correspond à l'adresse de saut suivant indiquée dans l'en-tête de multidiffusion (18).

3. Réseau de communication radio (10) avec une norme de communication et au moins un premier noeud (12), un second noeud (12) qui est un noeud intermédiaire, et un noeud de destination (12) configurés pour communiquer entre eux, dans lequel la norme de communication possède un format de données pour un échange de données qui comprend un en-tête de multidiffusion (18) pour acheminer des données d'un signal radio par le biais du réseau de communication radio (10), dans lequel l'en-tête de multidiffusion (18) comprend des données d'adresse, dans lequel chaque noeud (12) du réseau de communication radio (10) comprend en outre une table d'acheminement qui fournit des informations d'adresse,
dans lequel le premier noeud (12) est configuré pour fournir ou générer le signal radio, dans lequel le premier noeud (12) est configuré pour accéder à la table d'acheminement, dans lequel le premier noeud (12) est configuré pour déterminer quels noeuds intermédiaires (12) sont requis pour transférer le signal radio à un noeud de destination (12), dans lequel le réseau de communication radio (10) est configuré pour mettre en oeuvre le procédé selon l'une quelconque des revendications précédentes.

4. Réseau de communication radio (10) selon la revendication 3, dans lequel la table d'acheminement comporte des informations d'adresse de tous les noeuds (12) dans le réseau de communication radio (10).

5. Signal radio devant être transmis par voie hertzienne par un procédé selon l'une quelconque des revendications 1 ou 2 ou par un réseau de communication radio (10) selon l'une quelconque des revendications 3 ou 4, dans lequel le signal radio (14) comprend un en-tête de commande d'accès au support (16), une charge utile (20) et un en-tête de multidiffusion (18) pour acheminer des données du signal radio (14) par le biais du réseau de communication radio (10), dans lequel l'en-tête de multidiffusion (18) est configuré pour être adapté par un noeud (12) d'un réseau de communication radio (10) par l'intermédiaire duquel le signal radio (14) est transmis par voie hertzienne, **caractérisé en ce que** l'en-tête de multidiffusion (18) du signal radio (14) est vide lorsque le signal radio (14) est transmis par le noeud respectif à un noeud suivant (12) dans le voisinage à un seul saut du noeud respectif (12), et lorsque le noeud suivant correspond à un noeud de destination, et dans lequel des informations concernant une adresse de destination sont stockées dans l'en-tête de commande d'accès au support (16) du signal radio (14).
